# EUROPEAN PATENT APPLICATION

(11) **EP 3 214 265 A1**
(43) Date of publication of application: **06.09.2017**
(21) Application number: 16158041.0
(22) Date of filing: 01.03.2016
(51) Int. Cl.: F01D 5/08, F02C 7/18

(54) **PRESWIRLER WITH COOLING HOLES**

(71) Applicant: Siemens Aktiengesellschaft, 80333 München (DE)
(72) Inventor: Brown, James, Lincoln, LN1 2LU (GB)
(74) Representative: Maier, Daniel Oliver

(57) **Abstract**

A gas turbine component (1) is described, comprising a main body (80) having a front surface (77), a rear surface (78) and at least one through hole (81) extending from the front surface (77) to the rear surface (78), the through hole (81) having a hole inlet (86), a hole outlet (87) and a central axis (82), which preferably runs normal to the front surface (77). The component comprises a perforated plate (83), comprising a flat portion (96), which is positioned at the rear surface (78) and connected to the rear surface (78) of the main body (80), and at least one formed perforation (97) comprising a perforation outlet (88), the formed perforation (97) being positioned at the hole outlet (87) and forming a flow channel from the hole outlet (87) to the perforation outlet (88), the perforation outlet (88) having a central line (79), wherein the central line (79) of the perforation outlet (88) and the central axis (82) of the through hole (81) include an angle α between 40° and 90°.

## Description

### Field of the invention and state of the art

The present invention relates to a gas turbine component with cooling holes and a method of manufacturing the component.

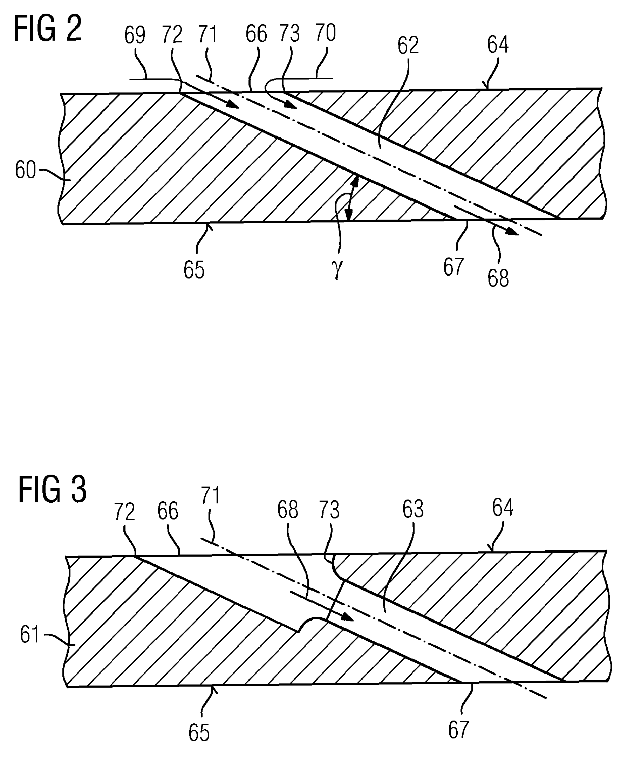

Gas turbines typically comprise components which are exposed to high temperatures and have to be cooled. For instance as shown in Fig. 2, cooling air for a rotating turbine blade is fed down angled drillings in a stationary plate in front of the rotating turbine disc. Preferably, these drillings are angled at around 20° to the axial plane so the air swirls circumferentially with the disc. Pre-swirling the air in the direction of disc rotation allows the rotor to entrain it at a temperature close to the static temperature.

Whilst the shallow angle reduces airflow entry losses on one side, the other side has a very sharp turn which is poor for flow. To counteract this, as shown in Fig. 3 the drillings are countersunk to make the entry bigger, and reduce this problem. Machining the holes at the shallow angle may require a separate operation to put the part in a jig, or a CNC machine with a tilting head. The angled drilled hole is longer than one drilled normal to the surface, so takes longer to drill and produces more waste swarf. There may also be a tendency for the drill to wander off centre because of the shallow angle.

There have been documents suggesting different ways to change the cooling flow from the axial to tangential directions. Ideas include cast vanes, axial inflow closer to axis and radial flow via a separate rotor disc and small machined vane segments.

The document US 2007/0110565 A1 discloses a method of manufacturing a gas turbine engine comprising a mid-frame having an opening to facilitate channeling cooling air into a gap and configured to impact a high relative tangential velocity into the cooling air discharged from the opening.

US 2008/0112793 A1 describes a gas turbine with an interstage cooling circuit supporting a row of turbine blades for channeling interstage bleed cooling air thereto.

In US 2008/0310950 A1 a path within a wall is provided, which is particularly shaped in portions to provide entrainment of a hot leakage gas flow away from entry into the cavity below a high pressure turbine disc.

US 2010/0275612 A1 discloses an apparatus for cooling turbine blades including a direct transfer axial tangential onboard injector with a plurality of openings emanating a flow of cooling air.

In the documents US 2011/0247345 A1 and US 8584469 B2 describe a gas turbine including a pre-swirl structure. Inner and outer wall structures of the pre-swirl structure define a flow passage in which flow members, which have a leading edge and a circumferentially offset trailing edge, are located.

US 3,832,090 relates to cooling air passage ways to cool the rotor of a gas turbine.

In US 4,456,427 the turbine blades of a gas turbine jet engine are cooled by cooling air injected into cooling channels in the blade using angled nozzles.

US 5,245,821 discloses an aerodynamically efficient flow transfer device having a means to transfer flow from a static element to a rotor element such that the end of the exit flow is substantially parallel to an exit plane that is perpendicular to the axis of rotation of the rotor and substantially tangential to the operational rotational direction of the rotor. A cooling air flow transfer apparatus between a stationary compressor and turbine rotor is provided, having an inducer which includes cooling air flow holes or passages that are acutely angled in a tangential manner to the rotational direction of the rotor. The passages include a cylindrical section leading to a downstream flared outlet in the form of an open channel that has a back wall with a portion that curves to be parallel to the exit plane of the inducer at the channel's end.

### Description of the invention

It is an objective of the present invention to provide an advantageous gas turbine component and a method for manufacturing it, especially a quicker and cheaper way of making pre-swirl holes which are configured to feed air tangentially onto a turbine rotor disc.

The objective is solved by a gas turbine component as claimed in claim 1, a gas turbine as claimed in claim 10 and a method for manufacturing a gas turbine component as claimed in claim 13. The depending claims define further developments of the present invention.

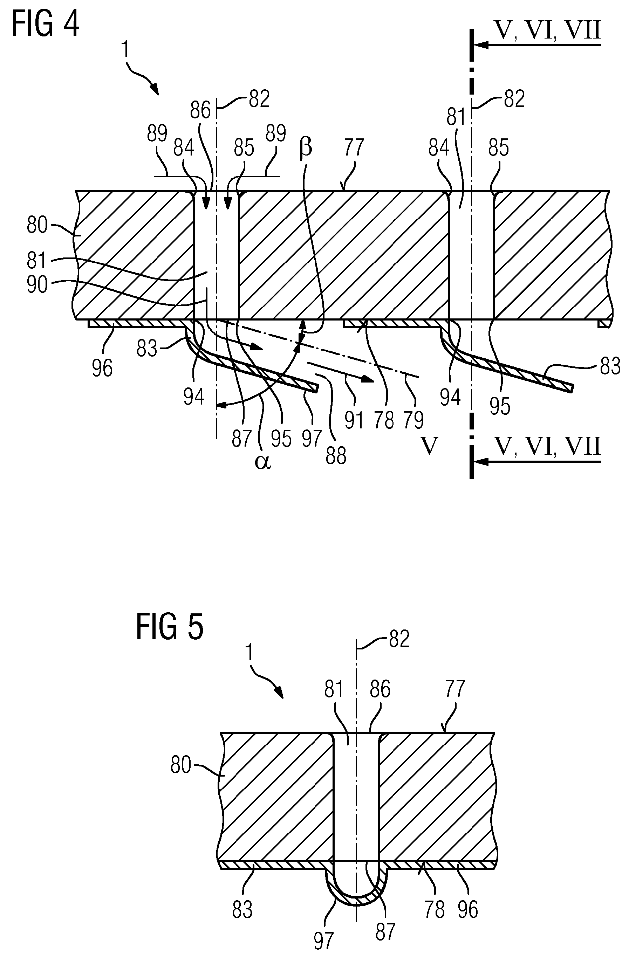

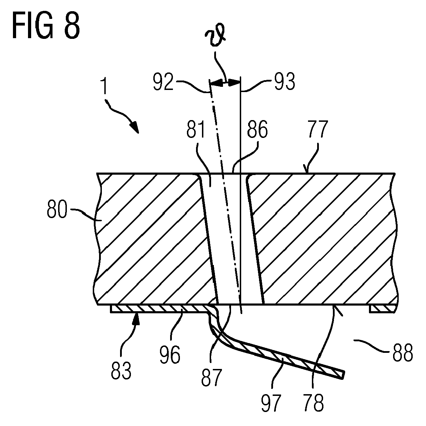

The inventive gas turbine component comprises a main body having a front surface, a rear surface and at least one through hole. The through hole extends from the front surface to the rear surface. Furthermore, the through hole has a hole inlet, a hole outlet and a central axis. The central axis may typically run normal to the front surface but can be up to 35 degrees from normal (see Fig. 8). The inventive component comprises a formed plate. The formed plate comprises a flat portion and at least one perforation. The flat portion is positioned at the rear surface and connected to the rear surface of the main body. The perforation comprises a perforation outlet which can be pressed into a flow channel, typically with a radiused shape or others as in Fig. 5, 6 or 7. The perforation is positioned at the hole outlet and forms a flow channel from the hole outlet to the perforation outlet. The perforation outlet has a central axis or central line. The central line of the perforation outlet and the central axis of the through hole include an angle between 40° and 90°, advantageously between 60° and 80°, preferably between 65° and 75°.

The invention is based on the idea to split the function of the part, which changes the air flow direction, into two pieces, namely drilling the entry holes axially, normal to the surface in the same way the adjacent bolt holes are drilled, and adding for instance a pressed metallic formed perforated plate, especially a steel perforated plate or a Nimonic perforated plate, to the back to change the airflow direction. The metallic perforated plate can comprise iron (Fe) and/or nickel (Ni).

In other words, a flow channel is formed by a through hole and a perforation enabling an air flow from the through hole inlet along the hole, further via the through hole outlet into the perforation to the perforation outlet. The air can flow out of the component through the perforation outlet.

The inventive gas turbine component may be a static component. Preferably, the gas turbine component comprises a plurality of through holes and a plurality of formed plates with perforations. The main body can comprise a plate or can be formed as a plate. The central axis of the through hole can be normal to the rear surface and/or to the front surface of the main body. Alternatively the central axis of the through hole can include an angle ϑ between 0° and 45°, preferably between 0° and 20°, with a normal direction to the rear surface and/or the front surface of the main body.

In the present document the formed plate with perforations is also designated as perforated plate, but does not mean, that a perforation is just a hole. In the present context a perforation can be a bent and/or pressed and/or formed flow channel.

Generally, the perforated plate is configured to change the direction of an air flow exiting the through hole, especially towards the direction of the central line of the perforation outlet.

Advantageously the flat portion of the perforated plate lays on the rear surface of the main body and is aligned to the main body.

In a variant the main body comprises a plurality of through holes and the perforated plate comprises a plurality of perforations, which are positioned circumferentially about a rotation axis of a gas turbine and/or which are positioned along an axial direction of a gas turbine. Advantageously, the number of through holes corresponds to the number of perforations and each through hole outlet is covered by or connected to a perforation.

The through hole inlet and/or the through hole outlet can comprise a rounded edge or chamfered edge. This improves the flow characteristics and reduces unwanted turbulences. For example, the through hole inlet and/or the through hole outlet may have a conical shape. In a preferred variant the through hole outlet comprises an upstream edge portion and a downstream edge portion and only the downstream edge portion has a rounded, chamfered or conical shape.

At least one perforation, for instance, comprises a curved or bent or rounded portion. This provides a smooth change of the air flow direction and reduces turbulences.

Preferably, the perforated plate comprises a metallic material. It may comprise iron (Fe) and/or nickel (Ni) or can consist of Fe and/or Ni. As an example, the perforated plate comprises steel or Nimonic, for example pressed steel or Nimonic, or consists of steel or Nimonic, for example pressed steel or Nimonic.

In a further variant the perforation is formed as a nozzle. This increases the speed of the air flow and improves the cooling efficiency of the component. For example, the through hole outlet has a cross-sectional area and the perforation outlet has a cross-sectional area, which is smaller than the cross-sectional area of the through hole outlet. This configuration acts as a nozzle. In another example the through hole inlet has a cross-sectional area and the perforation outlet has a cross-sectional area, which is smaller than the cross-sectional area of the through hole inlet.

The inventive gas turbine comprises a gas turbine component, as previously described. The inventive gas turbine has the same advantages and properties as the previously described gas turbine component.

The gas turbine preferably comprises a rotor disc with a rotation axis and the central axis of the perforation outlet is oriented in tangential direction with respect to the rotation axis of the rotor disc. Advantageously, the gas turbine component comprises a stationary plate positioned in front of the rotor disc.

The center line of at least one perforation outlet can be oriented perpendicular to the radial direction. This allows a tangential cooling flow to the rotor disc. In other words the gas turbine component is positioned such that a cooling air flow tangentially onto the rotor disc is enabled.

The inventive method for manufacturing a previously described gas turbine component comprises the steps of drilling a through hole into the main body, preferably such that the central axis of the hole runs normal to the front surface of the main body, and connecting the perforated plate to the rear surface of the main body such that the flat portion is facing the rear surface and the at least one perforation is positioned on or over or covering the outlet of the through hole.

Advantageously, the method further comprises fastening the perforated plate onto the rear surface of the main body.

Preferably, a formed perforated metallic plate can be used as perforated plate. The metallic plate can comprise Fe and/or Ni or can consist of Fe and/or Ni. For example, the metallic plate can comprise steel and/or Nimonic or can consist of steel and/or Nimonic. The method may also comprise the step of stamping perforations into a plate, preferably a metallic plate, to form the perforated plate. The method may further comprise the step of cutting holes and the step of forming channels into a plate, preferably a steel plate, to form the perforated plate.

The invention, especially the inventive method, provides a quicker and cheaper way of making pre-swirl holes which feed air tangentially onto the turbine rotor disc.

Generally, the invention has the following advantages:
It allows easier drilling of the holes and is therefore cost saving. A main advantage of the invention is cost saving. A fully radii entry is allowed to be machined for smoother air flow. It provides adjustability to the airflow, if different perforated plates with different heights of the perforations, in other words with different angles between the center line of the perforation outlet and the central axis of the through hole, are produced and used. Additionally, the invention allows the possibility of adding a nozzle type restriction to the outlet to speed airflow.

The invention separates the action of changing flow direction into two parts, both of which can be made simply. The first plate or main body is simply drilled through, normal to the surface, presenting a tube to the flow which reduces turbulence. A radius can be added to the flow entry with the same tool to reduce losses if necessary. The second plate or perforated plate changes the flow direction via a radiused outer bend. This plate could be made from a sheet metal stamping.

### Brief description of the drawings

The above mentioned attributes and other features and advantages of this invention and the manner of attaining them will become more apparent and the invention itself will be better understood by reference to the following description of embodiments of the invention taken in conjunction with the accompanying drawings. The embodiments do not limit the scope of the present invention which is determined by the appended claims. All described features are advantageous as separate features or in any combination with each other.
- Fig. 1: schematically shows part of a turbine engine in a sectional view and in which the inventive gas turbine component can be incorporated.
- Fig. 2: schematically shows part of a gas turbine component with a cooling hole, as known from the state of the art, in a sectional view.
- Fig. 3: schematically shows part of a gas turbine component with another variant of a cooling hole, as known from the state of the art, in a sectional view.
- Fig. 4: schematically shows part of an inventive gas turbine component in a sectional view.
- Fig. 5: schematically shows part of the inventive gas turbine component of Fig. 4 in a sectional view along V-V.
- Fig. 6: schematically shows an alternative flow channel cross section shape in a sectional view along VI-VI of Fig. 4.
- Fig. 7: schematically shows an alternative flow channel cross section shape in a sectional view along VII-VII of Fig. 4.
- Fig. 8: schematically shows in a sectional view a through hole drilled non-normal to main body.

### Detailed description of the invention

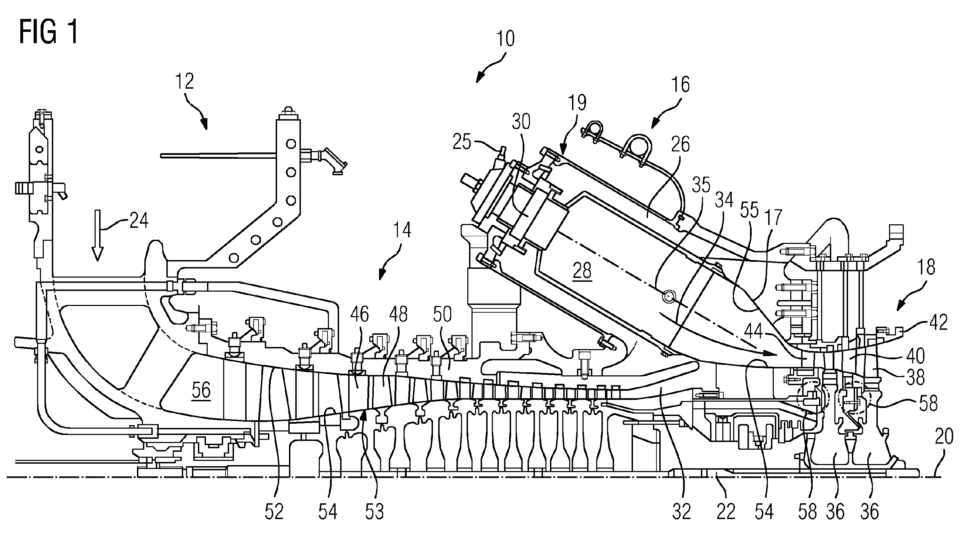

Fig. 1 shows an example of a gas turbine engine 10 in a sectional view. The gas turbine engine 10 comprises, in flow series, an inlet 12, a compressor section 14, a combustor section 16 and a turbine section 18 which are generally arranged in flow series and generally about and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.

The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 46. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.

The casing 50 defines a radially outer surface 52 of the passage 56 of the compressor 14. A radially inner surface 54 of the passage 56 is at least partly defined by a rotor drum 53 of the rotor which is partly defined by the annular array of blades 48.

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications.

The terms upstream and downstream refer to the flow direction of the airflow and/or working gas flow through the engine unless otherwise stated. The terms forward and rearward refer to the general flow of gas through the engine. The terms axial, radial and circumferential are made with reference to the rotational axis 20 of the engine.

The gas turbine comprises an inventive gas turbine component, as for example described with reference to figures 4 to 8. The gas turbine component can be incorporated at the positions indicated by circles 58.

Fig. 2 schematically shows part of a gas turbine component 60 with a cooling hole in a sectional view, as known from the above cited state of the art, especially from US 3,832,090 and US 2008/0310950 A1. The gas turbine component 60 comprises a front surface 64, a rear surface 65 and a number of through holes 62, for example in form of drillings. The through hole has a central axis 71, which includes an angle γ of around 20° with the rear surface 65. Moreover, the through hole 62 comprises an inlet 66 with an upstream edge 72 and a downstream edge 73, and an outlet 67. The through the hole is indicated by arrows 68, 69 and 70.

The turbine component 60 can be a stationary plate in front of the rotating turbine disc. Cooling air for a rotating turbine blade is fed down angled drillings, like the through hole 62, in the stationary plate in front of the rotating turbine disc. Preferably, these drillings are angled at around 20° to the axial plane so the air swirls circumferentially with the disc. Pre-swirling the air in the direction of disc rotation allows the rotor to entrain it at a temperature close to the static temperature.

Whilst the shallow angle at the upstream edge 72 of the inlet 66 reduces airflow entry losses on one side, as shown by the flow direction 69, the downstream edge 73 has a very sharp turn 70 which is poor for flow. To counteract this, the drillings are countersunk to make the entry bigger, and reduce this problem. This is shown in Fig. 3. The inlet 66 of the gas turbine component 61 of Fig. 3 is enlarged and the downstream edge 73 is rounded.

Machining the holes at the shallow angle may require a separate operation to put the part in a jig, or a CNC machine with a tilting head. The angled drilled hole is longer than one drilled normal to the surface, so takes longer to drill and produces more waste swarf. There may also be a tendency for the drill to wander off centre because of the shallow angle.

Fig. 4 schematically shows part of an inventive gas turbine component in a sectional view. Fig. 5 schematically shows part of the inventive gas turbine component of Fig. 4 in a sectional view V-V.

The gas turbine component 1 comprises a main body 80 and a perforated plate 83. The main body 80 comprises a front surface 77 and a rear surface 78. It further comprises a through hole 81 extending through the main body 80 from the front surface 77 to the rear surface 78. The through hole 81 has a central axis 82 or centre line. The central axis 82 runs normal to the front surface 77.

The perforated plate 83 comprises a flat portion 96 and at least one formed perforation 97, preferably a plurality of formed perforations 97. The flat portion 96 is positioned at the rear surface 78 and connected to the rear surface 78 of the main body.

Moreover, the through hole 81 comprises an inlet or inlet opening 86 located at the front surface 77 and an outlet or outlet opening 87 located at the rear surface 78. The inlet 86 can comprise a leading edge portion 84 and a trailing edge portion 85. Preferably, the leading edge portion 84 and/or the trailing edge portion 85 are chamfered or rounded or radiused. This improves the air flow into the inlet 86. The outlet 87 can comprise a leading edge portion 94 and a trailing edge portion 95. Advantageously also the trailing edge portion 95 of the outlet 87 is chamfered or rounded or radiused. This improves the air flow from the outlet 87 of the through hole 81 into the formed perforation 97 of the perforated plate 83.

The perforated plate 83 is connected to the rear surface 78 of the main body 80 such that the formed perforation 97 or the perforations is/are positioned over the through hole outlet 87 or covering the hole outlet 87 to form a flow channel from the hole outlet 87 to a perforation outlet 88. The perforation outlet 88 has a central axis or central line 79.

The central axis or central line 79 of the perforation outlet 88 and the central axis 82 of the through hole 81 include an angle α between 40° and 90°, advantageously between 60° and 80°, preferably between 65° and 75°.

The air flow through the inventive component 1 is indicated by arrows 89, 90 and 91. In Fig. 4 and Fig. 5 the formed perforations 97 have a rounded portion adjacent to the flat portion 96. This improves the flow characteristics through the component.

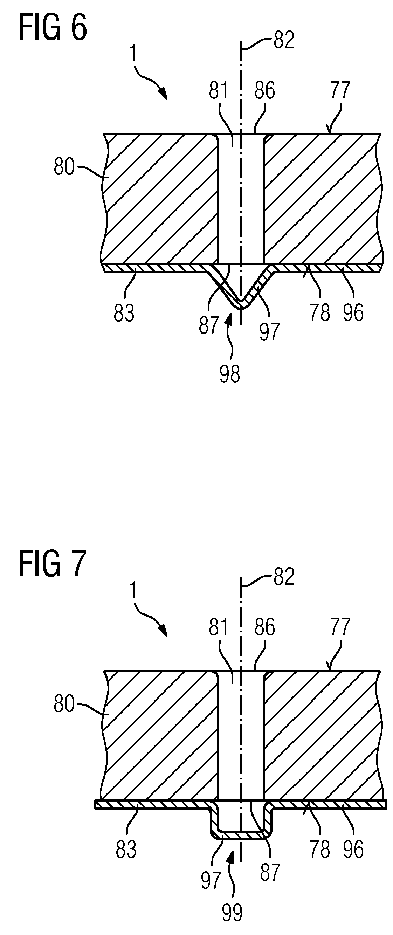

Fig. 6 and Fig. 7 schematically show alternative flow channel cross section shapes. In Fig. 6 the formed perforations 97 have a triangular portion 98 adjacent to the flat portion 96. In Fig. 7 the formed perforations 97 have a rectangular portion 99 adjacent to the flat portion 96.

Fig. 8 schematically shows in a sectional view a variant, where the through hole 81 is drilled non-normal to main body. The central axis 92 of the through hole 81 includes an angle ϑ between 0° and 45°, preferably between 0° and 20°, with a direction 93 normal to the front surface 77 and/or to the rear surface 78.

The method of manufacturing a previously described gas turbine component comprises the steps of drilling at least one through hole 81, preferably a plurality of through holes, into the main body 80, and connecting a perforated plate 83 to the rear surface 78 of the main body 80. Additionally, the edge 84, 85 of the through hole inlet 86 can be rounded or chamfered.

Generally, the holes for the formed perforations can be cut into a metallic plate, for example a steel plate, before the flow channels are formed in the plate and the plate connected to the main body 80.

The inventive gas turbine component 1 can be a stationary component, for instance a plate, and can be positioned in front of the rotating turbine disc. Cooling air for a rotating turbine blade can be provided through the component from the through hole inlets 86, through the holes 81 and along the formed perforations 97 through the perforation outlets 88 in front of the rotating turbine disc. Preferably, the central axis or centerlines 79 of the perforation outlets 88 are angled between 10° and 30°, especially at around 20°, to the axial plane so the air swirls circumferentially with the disc. This is indicated by angle β.

It is advantageous for the pre-swirled air exit to be tangential to the direction of disc rotation. This allows the rotor to entrain the air at a temperature close to the static temperature.

## Claims

1. Gas turbine component (1) comprising a main body (80) having a front surface (77), a rear surface (78) and at least one through hole (81) extending from the front surface (77) to the rear surface (78), the through hole (81) having a hole inlet (86), a hole outlet (87) and a central axis (82), **characterized in that**
the component comprises a formed perforated plate (83), comprising a flat portion (96), which is positioned at the rear surface (78) and connected to the rear surface (78) of the main body (80), and at least one formed perforation (97) comprising a perforation outlet (88), the formed perforation (97) being positioned at the hole outlet (87) and forming a flow channel from the hole outlet (87) to the perforation outlet (88), the perforation outlet (88) having a central line (79), wherein the central line (79) of the perforation outlet (88) and the central axis (82) of the through hole (81) include an angle α between 40° and 90°.

2. Gas turbine component (1), as claimed in claim 1, **characterized in that**
the central line (79) of the perforation outlet (88) and the central axis (82) of the through hole (81) include an angle α between 60° and 80°.

3. Gas turbine component (1), as claimed in claim 1 or claim 2,
**characterized in that**
the main body (80) comprises a plurality of through holes (81) and the perforated plate (83) comprises a plurality of formed perforations (97), which are positioned circumferentially about a rotation axis (20) of a gas turbine (10) and/or which are positioned along an axial direction of a gas turbine (10).

4. Gas turbine component (1), as claimed in any of the claims 1 to 3,
**characterized in that**
the through hole inlet (86) and/or the through hole outlet (87) comprises a rounded edge or chamfered edge (84, 85).

5. Gas turbine component (1), as claimed in any of the claims 1 to 4,
**characterized in that**
the formed perforation (97) comprises a curved portion.

6. Gas turbine component (1), as claimed in any of the claims 1 to 5,
**characterized in that**
the perforated plate (83) comprises metallic material.

7. Gas turbine component (1), as claimed in any of the claims 1 to 6,
**characterized in that**
the formed perforation (97) is formed as a nozzle.

8. Gas turbine component (1), as claimed in any of the claims 1 to 7,
**characterized in that**
the through hole outlet (87) has a cross-sectional area and
the perforation outlet (88) has a cross-sectional area, which is smaller than the cross-sectional area of the through hole outlet.

9. Gas turbine component (1), as claimed in any of the claims 1 to 8,
**characterized in that**
the through hole inlet (86) has a cross-sectional area and
the perforation outlet (88) has a cross-sectional area, which is smaller than the cross-sectional area of the through hole inlet.

10. A gas turbine (10) comprising a gas turbine component (1), as claimed in any of the preceding claims.

11. Gas turbine (10), as claimed in claim 10, comprising a rotor disc (36) with a rotation axis (20),
**characterized in that**
the central axis (79) of the perforation outlet (88) is oriented in tangential direction with respect to the rotation axis (20) of the rotor disc (36).

12. Gas turbine (10), as claimed in claim 10 or 11, comprising a rotor disc (36) with a rotation axis (20), **characterized in that**
the gas turbine component (1) comprises stationary plate positioned in front of the rotor disc (36).

13. A method for manufacturing a gas turbine component (1), as claimed in any of the preceding claims,
**characterized in that**
the method comprises the steps of:
- drilling a through hole (81) into the main body (80),
- connecting the perforated plate (83) to the rear surface (78) of the main body (80) such that the flat portion (96) is facing the rear surface (78) and the at least one formed perforation (97) is positioned on the outlet (87) of the through hole (81).

14. Method as claimed in claim 13,
**characterized in that**
using a perforated metallic plate.

15. Method as claimed in claim 13 or 14,
**characterized in that**
stamping perforations into a plate to form the perforated plate (83).
